# EUROPÄISCHE PATENTSCHRIFT

(11) **EP 0 631 039 B1**
(45) Veröffentlichungstag und Bekanntmachung des Hinweises auf die Patenterteilung: **31.01.1996**
(21) Anmeldenummer: 94107411.4
(22) Anmeldetag: 13.05.1994
(51) Int. Cl.: F01N 3/20

(54) **Brenner zur schnellen und motorunabhängigen Aufheizung eines Abgaskatalysators**
Burner for heating up an exhaust catalyst quickly and independently of the engine
Brûleur pour réchauffer rapidement et de façon indépendante du moteur un catalyseur d'échappement

(30) Priorität: 09.06.1993 DE 4319213
(43) Veröffentlichungstag der Anmeldung: 28.12.1994
(73) Patentinhaber: Firma J. Eberspächer, D-73730 Esslingen (DE)
(72) Erfinder: Kenner, Erich, D-73732 Esslingen (DE); Reiser, Peter, Dipl.-Ing., D-73732 Esslingen (DE)

(56) Entgegenhaltungen:
- EP-A- 0 573 028
- DE-A- 2 004 909
- DE-A- 2 311 064
- US-A- 4 383 411
- US-A- 5 143 700

## Beschreibung

Die Erfindung betrifft einen Brenner zur schnellen und motorunabhängigen Aufheizung eines in dem Abgasstrang eines Fahrzeugmotors angeordneten Katalysators, wobei ein Teil der Verbrennungsluft in den Brenner in Achsrichtung zugeführt wird, mit einer etwa senkrecht hierzu angeordneten Brennstoffzuführung sowie einer Zündeinrichtung, die in einer Zündkammer wirkt und einer als Ringkammer ausgebildeten Brennkammer mit tangentialem Anschluß an die Zündkammer sowie einer Sekundärluftführung in die Ringkammer, in die das Abgas des Fahrzeugmotors mittig zugeführt wird.

Ein derartiger Brenner hat die Aufgabe, entweder vor dem Motorstart den Katalysator selbst oder bei startendem Motor das zunächst noch relativ kalte Abgas des Motors vor seinem Eintritt in den Katalysator aufzuheizen, da der Katalysator zu einem Betrieb bei hohem Wirkungsgrad eine hohe Abgastemperatur verlangt. Bei den bekannten Anordnungen ohne Aufheizung des Motorabgases erfolgt daher beim Anfahren des Motors keine ausreichende Reinigung. Diese setzt erst ein, wenn der Katalysator seine Betriebstemperatur erreicht hat.

Es sind bereits Anordnungen zur schnellen und motorunabhängigen Vorwärmung von beizumischender Luft für Abgasreinigungseinrichtungen mit einem Katalysator bekannt. Eine derartige gattungsbildende Anordnung zeigt die DE-PS 23 11 064. Bei dieser Anordnung mündet in die als Rotationskammer (Ringkammer) ausgebildete Brennkammer tangential ein als Vorkammer ausgebildeter Mischhals und Einrichtungen zur Brennstoff-, Brennluft- und Zusatzluftzufuhr und zur Zündung. Dieser Mischhals weist einen sehr komplizierten Aufbau auf mit engen Fertigungstoleranzen. Bei dieser bekannten Anordnung ist hinter einer zusätzlichen Mischstrecke ein eine Mischdüse enthaltendes Anschlußteil angeordnet mit den Anschlüssen für Brennluft und einer zusätzlichen Steuerleitung sowie für die Brennstoffzufuhr. Die Mischdüse besteht dabei aus einem Einsatz zur Brennluftzufuhr und einem konzentrischen Bauteil für die Brennstoffzufuhr mit einem Zerstäuberring. Es hat sich gezeigt, daß die Luftzerstäuberdüse sehr teuer und störanfällig ist, so daß es zu Ausfällen kam.

Nach der DE 41 30 377 A1 ist ferner ein Brenner zur Erzeugung der für eine thermische Regeneration von Partikelfilter für Dieselmotoren erforderlichen Wärme bekannt, dessen Heizleistung sich in einem weiten Bereich dadurch regeln läßt, daß vor einer Hauptbrennkammer mit Verbrennungsluft- und Brennstoffzufuhr eine Vorkammer mit abgezweigter Verbrennungsluft- und Brennstoffzufuhr und der Zündeinrichtung angeordnet ist. Dieser Brenner ist stirnseitig an einem Partikelfilter angesetzt, so daß das Heizmedium axial zuströmt. Das partikelbeladene Abgas wird dabei dem Raum vor dem Partikelfilter in den das Abgas Heizmedium zuströmt tangential zugeführt. Mit dieser Anordnung ergibt sich zwar ein besonders gut regelbares Freibrennen des Partikelfilters, jedoch bei relativ langer Aufheizzeit.

Der Erfindung liegt - ausgehend von diesem Stand der Technik - die Aufgabe zugrunde, einen Brenner der gattungsgemäßen Art aufzuzeigen, der es bei einem Aufbau aus fertigungstechnisch einfachen Elementen ermöglicht, in sehr kurzer Zeit entweder vor dem Motorstart den Katalysator selbst oder bei startendem Motor das noch relativ kalte Abgas des Motors vor seinem Eintritt in den Katalysator aufzuheizen.

Diese Aufgabe wird durch die im Patentanspruch 1 aufgeführten Merkmale gelöst.

Damit wird ein sehr einfach aufgebauter Brenner geschaffen, der ohne engtolerierte Bauteile aufgebaut ist, insbesondere ohne Zerstäuberdüse, die besonders störanfällig bei dem Betrieb als Aufheizeinrichtung für das Abgas aus Fahrzeugmotoren ist, der druckunempfindlich gezündet und mit wahlweise kleiner oder großer Leistung betrieben werden kann.

Es hat sich ferner gezeigt, daß dieser Brenner die Forderungen erfüllt, daß zur Katalysatorvorwärmung innerhalb von 30 sec. eine Temperatur von 300 °C erreicht werden muß bei sofortigem Start der Anlage. Es wurde mit diesem Brenner auch die weitere Aufgabe gelöst, eine Einrichtung mit nur minimaler Wandabdampfung aufzuzeigen. Diese Lösung ist auch unter dem Gesichtspunkt der Fahrzeugsicherheit zu sehen.

In vorteilhafter Weise kann gemäß Anspruch 12 der Brenner auch für eine motorunabhängige Aufheizung von Luft, z.B. für die Scheibenentfrostung verwendet werden. In diesem Fall wird statt der abgas führenden Leitung des Fahrzeugmotors eine luftführende Leitung vorgesehen und eine Zumischung des Brennerabgases dadurch verhindert, daß die Luft einen Wärmetauscher durchströmt und in diesem aufgeheizt wird.

Die Anordnung der Zündeinrichtung und des Brennstoffzuführstutzens in gleicher Ebene hat neben der Verbesserung der Zündwilligkeit des Brennstoff-/Luftgemisches noch den Vorteil, daß infolge der axialen Ausrichtung eine turbulenzarme Strömung entsteht und in deren Folge eine besonders zuverlässige Zündung.

Eine zweckmäßige Ausgestaltung des Brenners ist dadurch gekennzeichnet, daß der abgezweigte Verbrennungsluftteilstrom der Brennkammer in dem radial äußeren Bereich zugeführt wird. Dabei ist es vorteilhaft, daß die Verbrennungsluftteilstromleitung, durch die etwa 50 bis 70 % der Gesamtverbrennungsluftmenge als Sekundärluft geführt wird, in die Brennkammer ragt und entlang eines Abschnittes des Brennkammermantels angeordnet ist. Dadurch wird erreicht, daß die Sekundärluftbeimischung in Drallrichtung der einlaufenden Flamme aus der Zündkammer erfolgt. Die Zuströmung der Sekundärluft erfolgt dabei in vorteilhafter Weise in etwa der Mitte der Längserstreckung der Brennkammer. Da sich durch die tangentiale Sekundärluftführung, die die in der Zündkammer gebildete Flamme umhüllt, in der Brennkammer entlang des Brennkammermantels ein Luftschleier aufbaut, der die Flamme in der Brennkammer von der Brennkammerwand abhält, wird eine Überhitzung der Brennkammerwand verhindert. Durch die beschriebene Zuführung der Sekundärluft kann sich so in der Brennkammer die Flamme voll ausbilden und in sehr kurzer Zeit eine Aufheizung des in die Brennkammer eintretenden Fahrzeugmotorabgases erfolgen. Dabei hat es sich als vorteilhaft erwiesen, daß der Abschnitt, in dem die Teilluftstromleitung an dem Brennkammermantel entlang geführt ist, einem Zentriwinkel von maximal 45° entspricht.

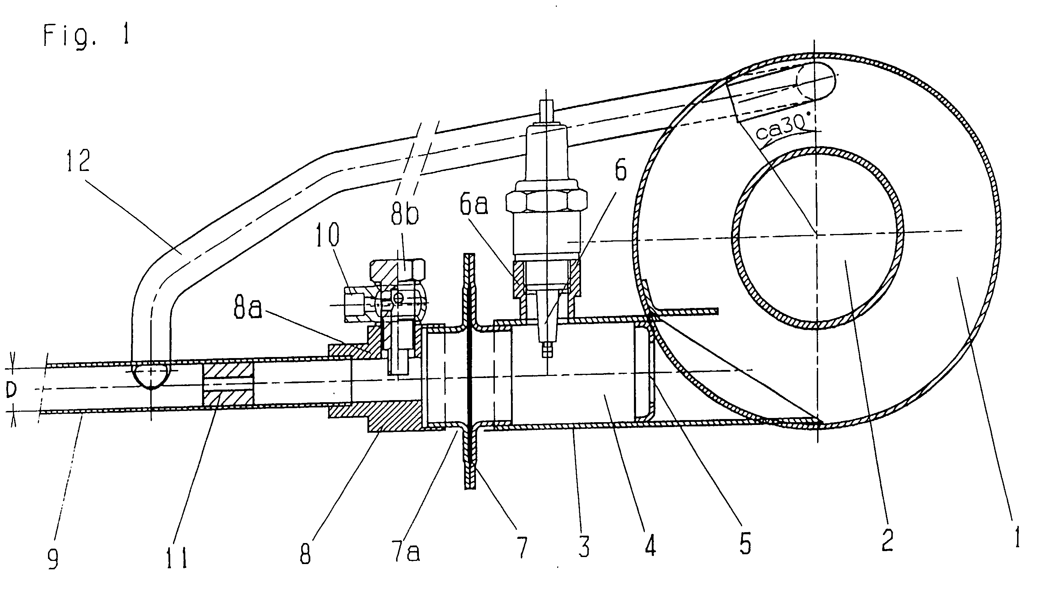

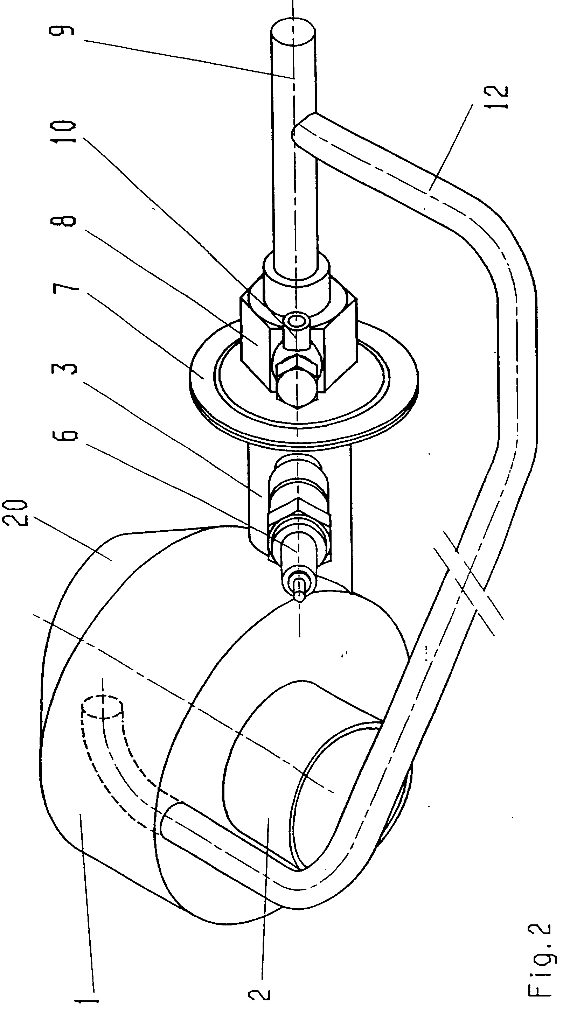

Ein bevorzugtes Ausführungsbeispiel ist in vereinfachter Darstellung in den Fig. 1 und 2 dargestellt und wird nachfolgend näher erläutert. Es zeigt:
Fig. 1 einen Längsschnitt,
Fig. 2 eine Ansicht
   des erfindungsgemäßen Brenners.

Die Brennkammer 1 ist als Ringkammer ausgebildet, in die die von dem nicht dargestellten Fahrzeugmotor kommende Abgasleitung 2 geführt ist. Diese kann in die Brennkammer 1 ragen oder an einen an der Brennkammer 1 angeformten Stutzen angeordnet sein. Dabei hat sich gezeigt, daß die Eindringtiefe der Abgasleitung 2 in die Brennkammer 1 einem Ausblasen der Flamme in der Brennkammer entgegenwirken kann. Die Gefahr des Ausblasens ergibt sich dadurch, daß in der Brennkammer 1 zunächst durch das sehr fette Gemisch eine dunkle, langsame Verbrennung stattfindet und dann das pulsierende, ausströmende Abgas des Fahrzeugmotors mit hohem Druck in die Brennkammer eintritt. Daher ist es in besonderen Fällen sehr vorteilhaft, die Abgasleitung mit einer Einlaufbrause zu versehen oder mit das Abgas leitende Elementen, wie z.B. Austrittsschlitze, bei denen die Schlitze dreiseitig geschnitten und in die Ausströmform bestimmend nach innen gebogen sind. Aus der Brennkammer 1 wird das Abgas des Motors aufgeheizt und vermischt mit dem Abgas des Brenners über einen dem Einlauftrichter des Katalysators angepaßten, z.B. kegelförmigen Anschluß 20 abgeleitet und dem nicht dargestellten Katalysator zugeführt.

Der Brennkammer 1 wird das fett eingestellte und gezündete Brennstoff-/Luftgemisch über einen tangential an die Brennkammer 1 angesetzten Stutzen 3 aus der Zündkammer 4 zugeführt, wobei in der Zündkammer 4 auch die Mischung des Brennstoffes mit der Verbrennungsluft erfolgt. Die Zündkammer 4 weist brennkammerseitig eine Flammenhalterblende 5 auf. Diese Blende 5 ist als Einsatz ausgebildet und trägt zur Stabilisierung der Flamme zwischen der Zündkammer 4 und der Brennkammer 1 bei. In der Zündkammer 4 ist ferner die Zündeinrichtung 6 angeordnet. Dabei handelt es sich in der Regel um eine Hochspannungs-Zündkerze, die in einem Stutzen 6a eingesetzt ist. Vor der Zündeinrichtung 6 ist bei dem Ausführungsbeispiel noch eine Wärmedrossel 7 angeordnet, um den Wärmeübergang durch Wärmeleitung im Gehäuse der Zündkammer 4 zu der Brennstoffversorgung herabzusetzen, damit in der Brennstoffzufuhr keine Dampfblasen entstehen, die zu einer Unterbrechung der Brennstoffzuführung und damit einem Stillstand des Brenners führen können. Diese Wärmedrossel 7 ist im Ausführungsbeispiel so ausgebildet, daß der Rohrleitungsabschnitt 7 geteilt ist und an den beiden Abschnitten mit einem Flansch versehen ist, der in den äußeren Bereich eine Stufe aufweist, so daß beim zusammengesetzten Rohrleitungsabschnitt 7a im Bereich der Flansche ein Abstand zwischen den Flanschen entsteht.

Stromab vor dem Rohrleitungsabschnitt 7a ist die Brennstoffzuführung angeordnet. Diese besteht aus einem Rohrleitungsteil 8, das an den Leitungsabschnitt 7a angeschlossen ist und eine stufenförmige Innendurchmesser-Verringerung auf das Maß der angeschlossenen Verbrennungsluftleitung 9 aufweist. Der Rohrleitungsteil 8 kann als Dreh- oder Gußteil ausgebildet sein und weist einen Stutzen 8a zum Anschluß der Brennstoffzuführung 8b auf. Diese besteht im Ausführungsbeispiel aus einem einer Hohlschraube ähnlichen Bauteil, über das der Brennstoff aus der Brennstoffzufuhrleitung 10 zugeführt wird. Hierzu ragt die Brennstoffzufuhr in den Rohrleitungsteil 8. In der an den Rohrleitungsteil 8 angeschlossenen Verbrennungsluftleitung ist eine Drosselstelle 11 eingesetzt. Stromab vor dieser Drosselstelle 11 zweigt eine Leitung 12 ab, die einen Teil der Verbrennungsluft aus der Leitung 9 in die Brennkammer 1 führt. Dabei erfolgt der Anschluß der Verbrennungsluftleitung 12 in die Brennkammer 1 stirnseitig im radial äußeren Bereich der Stirnwand diese durchdringend, und anschließend verläuft die Leitung 12 in einem Bereich zu dem Brennkammermantel hin, der einem Zentriwinkel von max. 45° entspricht, im Ausführungsbeispiel etwa 30°, so daß die Ausströmung an den Brennkammermantel erfolgt. Durch die Führung der Leitung 12 in der Brennkammer 1 erfolgt die Sekundärverbrennungsluft-Beimischung mit einem Anteil von etwa 50 bis 70 % der Gesamtverbrennungsluftmenge in Drallrichtung der einlaufenden Flamme. Durch die tangentiale Zuführung bildet sich in Abhängigkeit der Strömungsgeschwindigkeit der zugeführten Verbrennungsluft am Umfang der Brennkammerwand ein Luftschleier aus, der die Brennkammerwand vor einer Überhitzung durch Ausbildung der Grenzschicht schützt.

In der Brennkammer 1 können im Bereich des Motorabgasaustritts aus dem kegelförmigen Anschluß 20 noch das Motorabgas leitende Elemente, z.B. Führungsbleche, angeordnet sein, die auch dazu dienen können, Tröpfchen von mitgerissenem, unverbranntem Brennstoff zurückzuhalten.

Der über die Brennstoffzuführung 8b in dem Verbrennungsluftstrom eingebrachte Brennstoff vermischt sich mit der Verbrennungsluft unter Bildung eines Brennstoff-/Luftkegels und wird der Zündeinrichtung 6 zugeführt.

Eine der örtlichen Umgebung angepaßte relative Verdrehung gegeneinander ist ebenfalls möglich, wenn nur die Funkenstrecke im oberen Bereich des Brennstoff/Luftkegels bleibt.

In dem dargestellten Ausführungsbeispiel liegen der Stutzen 6a für die Zündeinrichtung 6 und der Stutzen 8a für die Brennstoffzuführung in der gleichen Ebene.

Für einen optimalen Betrieb des erfindungsgemäßen Brenners sind die Abstände von der Brennstoffzuführung zur Zündeinrichtung wichtig sowie die Länge der Zündkammer, die auch als Mischkammer wirkt sowie die Eintauchtiefe der Brennstoffzuführung in den Rohrleitungsteil. Diese Einstellungen lassen sich ggf. in einem Versuch leicht einstellen, da der Brenner aus den einzelnen Abschnitten Zündkammer 4, Wärmedrossel 7, Rohrleitungsteil 8 zusammengebaut ist. In dem Ausführungsbeispiel haben sich folgende Relationen, bezogen auf den Innendurchmesser (a) der Verbrennungsluftleitung 9 als besonders vorteilhaft erwiesen:

| | |
|---|---|
| Eindringtiefe der Brennstoffzufuhr | ca. 0,4 a |
| Innendurchmesser der Zündkammer | ca. 2,3 a |
| Eindringtiefe der Zündeinrichtung 6 | ca. 0,75 a |
| Abstand Brennstoffzufuhr zur Zündeinrichtung | ca. 3,5 a |
| Abstand Zündeinrichtung zur Flammenblende | ca. 2,7 a |
| Innendurchmesser der Brennstoffzufuhr | ca. 0,3 a. |

Diese Werte stellen ermittelte Richtwerte nur für das Ausführungsbeispiel dar und bilden Anhaltswerte für Ausführungen mit abweichendem Innendurchmesser der Verbrennungsluft-Zufuhrleitung 9.

Mit dem aufgezeigten Brenner ist es auch möglich, andere Medien als das Abgas eines Fahrzeugmotors aufzuheizen. So kann anstelle der Leitung 2 für das Abgas des Fahrzeugmotors auch eine luftführende Leitung angeschlossen werden und die Zumischung des Brennerabgases durch geeignete Gestaltung der Brennkammer verhindert werden. In diesem Fall wird nicht das Abgas des Fahrzeuges aufgeheizt, sondern Luft, die anschließend z.B. für die Scheibenentfrostung oder zur Kabinenbeheizung verwendet wird. Der Brenner kann damit überall dort schnell Wärme-/Heizleistung zur Verfügung stellen, wo diese eingesetzt werden soll. Dabei kann der Brenner wahlweise mit großer oder kleiner Heizleistung betrieben werden. Bei einem Betrieb mit großer Leistung wird ein unterstöchiometrisches Gemisch (lambda = 0,6 bis 1) in der Zündkammer 4 gezündet und die vollständige Verbrennung erfolgt unter Zumischung von Verbrennungsluft aus der Verbrennungsluftleitung 12 in der Brennkammer 1.

Bei Verwendung des Brenners für kleine Leistungen erfolgt die Verbrennung nach der Zündung in der Zündkammer 4 unter Zumischung (in den Fig. nicht dargestellt) von zusätzlicher Verbrennungsluft in dem hinter der Zündeinrichtung 6 liegenden Abschnitt der Zündkammer 4.

## Patentansprüche

1. Brenner zur motorunabhängigen Aufheizung eines im Abgasstrang eines Fahrzeugmotors angeordneten Katalysators, mit einem Leitungsabschnitt (9), dem ein Teil der Verbrennungsluft als Primärluftstrom in Achsrichtung zugeführt wird und der mit einer etwa senkrecht hierzu angeordneten Brennstoffzuführung versehen ist, mit einer stromab hiervon angeordneten Zündeinrichtung (6), die in eine Zündkammer (4) wirkt, mit einer als Ringkammer ausgebildeten Brennkammer (1) mit tangentialem Anschluß der Zündkammer und einer mittigen zuführleitung (2) für das Abgas des Motors sowie mit einer Sekundärluftzuführung (12),
dadurch gekennzeichnet, daß
die Brennstoffzuführung als in den Primärluftstrom ragender Brennstoffzufuhrstutzen (8b) ausgebildet ist und daß stromauf vor diesem der restliche Teilstrom der Verbrennungsluft über eine Leitung (12) als Sekundärluftzuführung abzweigt und der Brennkammer (1) tangential zugeführt wird.

2. Brenner nach Anspruch 1, dadurch gekennzeichnet, daß die Leitung (12) in die Brennkammer (1) ragt und entlang eines Abschnittes des Brennkammermantels angeordnet ist.

3. Brenner nach Anspruch 2, dadurch gekennzeichnet, daß der Abschnitt des Brennkammermantels einem Zentriwinkel von maximal 45° entspricht.

4. Brenner nach einem der Ansprüche 1 bis 3, dadurch gekennzeichnet, daß als Abschluß der Zündkammer (4) eine Flammenhalterblende (5) angeordnet ist.

5. Brenner nach einem der Ansprüche 1 bis 4, dadurch gekennzeichnet, daß die Länge des in den Primärluftstrom ragenden Brennstoffzufuhrstutzens (8b) etwa 0,35 bis 0,45 des Durchmessers D der die gesamte Verbrennungsluft führenden Luftleitung (9) beträgt.

6. Brenner nach einem der Ansprüche 1 bis 5, dadurch gekennzeichnet, daß der Abstand zwischen dem Brennstoffzufuhrstutzen (8b) und der Zündeinrichtung (6) etwa 2,5 bis 3,5 des Durchmessers D der die gesamte Verbrennungsluft führenden Leitung (9) beträgt.

7. Brennkammer nach einem der Ansprüche 1 bis 6, dadurch gekennzeichnet, daß der Abstand zwischen der Zündeinrichtung (6) und der Flammenhalterblende etwa 1,5 bis 2,5 des Durchmessers D der die gesamte Verbrennungsluft führenden Leitung (9) beträgt.

8. Brenner nach Anspruch 1, dadurch gekennzeichnet, daß die Zuführleitung (2) für das Abgas in die Brennkammer (1) ragt.

9. Brenner nach Anspruch 8, dadurch gekennzeichnet, daß die Zuführleitung (2) für das Abgas eine Einlaufbrause aufweist.

10. Brenner nach Anspruch 8, dadurch gekennzeichnet, daß die Zuführleitung (2) für das Abgas an ihrem in die Brennkammer (1) ragenden Abschnitt nach innen gerichtete Abgasleitelemente aufweist.

11. Brenner nach Anspruch 1, dadurch gekennzeichnet, daß die Zündeinrichtung (6) in der Zündkammer (4) in der gleichen Längsebene wie der Brennstoffzufuhrstutzen (8b) angeordnet ist.

12. Brenner nach Anspruch 8, zur motorunabhängigen Aufheizung von Luft für Heizzwecke, dadurch gekennzeichnet, daß der Brennkammer (1) über die Zuführleitung (2) anstelle von Abgas Luft zuführbar ist, die einen Wärmetauscher durchströmt.

## Claims

1. A burner for heating, in a manner independent of the engine, a catalytic converter arranged in the exhaust gas line of a vehicle engine, having a pipe section (9) to which some of the combustion air is supplied in the axial direction as a primary air flow and which is provided with a fuel supply arranged approximately perpendicular thereto, having, downstream thereof, an ignition device (6) which acts in an ignition chamber (4), having a combustion chamber (1) constructed as an annular chamber, having a tangential connection to the ignition chamber and a central supply pipe (2) for the exhaust gas from the engine, and having a secondary air supply (12), characterized in that the fuel supply is constructed as a fuel supply connection piece (8b) projecting into the primary air flow, and in that, upstream thereof, the rest qf the flow of combustion air branches off as the secondary air supply by way of a pipe (12) and is supplied tangentially to the combustion chamber (1).

2. A burner according to Claim 1, characterized in that the pipe (12) projects into the combustion chamber (1) and is arranged along a section of the combustion chamber casing.

3. A burner according to Claim 2, characterized in that the section of the combustion chamber casing corresponds to a sector angle of at most 45°.

4. A burner according to one of Claims 1 to 3, characterized in that a flame-retaining shield (5) is provided as the termination of the ignition chamber (4).

5. A burner according to one of Claims 1 to 4, characterized in that the length of the fuel supply connection piece (8b) projecting into the primary air flow is approximately 0.35 to 0.45 of the diameter D of the air pipe (9) carrying all the combustion air.

6. A burner according to one of Claims 1 to 5, characterized in that the spacing between the fuel supply connection piece (8b) and the ignition device (6) is approximately 2.5 to 3.5 times the diameter D of the pipe (9) carrying all the combustion air.

7. A combustion chamber according to one of Claims 1 to 6, characterized in that the spacing between the ignition device (6) and the flame-retaining shield is approximately 1.5 to 2.5 times the diameter D of the pipe (9) carrying all the combustion air.

8. A burner according to Claim 1, characterized in that the supply pipe (2) for the exhaust gas projects into the combustion chamber (1).

9. A burner according to Claim 8, characterized in that the supply pipe (2) for the exhaust gas has an inlet spray means for the exhaust gas.

10. A burner according to Claim 8, characterized in that the supply pipe (2) for the exhaust gas has inwardly directed exhaust gas guide elements in the section thereof which projects into the combustion chamber (1).

11. A burner according to Claim 1, characterized in that the ignition device (6) is arranged in the ignition chamber (4) in the same longitudinal plane as the fuel supply connection piece (8b).

12. A burner according to Claim 8, for heating air for heating purposes, in a manner independent of the engine, characterized in that, instead of exhaust gas, air which flows-through a heat exchanger can be supplied to the combustion chamber (1) by way of the supply pipe (2).

## Revendications

1. Brûleur pour réchauffer indépendamment du moteur un catalyseur placé dans le tronçon d'échappement d'un moteur de véhicule, comprenant un segment de conduite (9) qu'alimente dans la direction de l'axe une partie de l'air de combustion sous la forme d'un flux d'air primaire, et qui est muni d'une arrivée de combustible disposée approximativement perpendiculairement, un dispositif d'allumage (6) placé en aval, qui agit dans une chambre d'allumage (4), une chambre de combustion (1) réalisée en tant que chambre annulaire à laquelle la chambre d'allumage est raccordée de façon tangentielle et qui est munie d'une conduite d'alimentation (2) centrale pour les gaz d'échappement du moteur, ainsi qu'une arrivée d'air secondaire (12), caractérisé en ce que l'arrivée de combustible est réalisée sous la forme d'un ajutage d'arrivée de combustible (8b) pénétrant dans le flux d'air primaire, et en ce qu'en amont, le flux partiel restant de l'air de combustion est dévié par le biais d'une conduite (12) en tant qu'arrivée d'air secondaire et alimente la chambre de combustion (1) de façon tangentielle.

2. Brûleur selon la revendication 1, caractérisé en ce que la conduite (12) pénètre dans la chambre de combustion (1) et est disposée le long d'un segment de l'enveloppe de la chambre de combustion.

3. Brûleur selon la revendication 2, caractérisé en ce que le segment de l'enveloppe de la chambre de combustion correspond à un angle au centre de 45° au maximum.

4. Brûleur selon l'une des revendications 1 à 3, caractérisé en ce que la chambre d'allumage (4) est fermée par un panneau accrocheur de flamme (5).

5. Brûleur selon l'une des revendications 1 à 4, caractérisé en ce que la longueur de l'ajutage d'arrivée du combustible (8b) pénétrant dans le flux d'air primaire se situe dans un rapport de 0,35 à 0,45 par rapport au diamètre D de la conduite d'air (9) véhiculant la totalité de l'air de combustion.

6. Brûleur selon l'une des revendications 1 à 5, caractérisé en ce que l'écart entre l'ajutage d'arrivée du combustible (8b) et le dispositif d'allumage (6) se situe dans un rapport de 2,5 à 3,5 par rapport au diamètre D de la conduite d'air (9) véhiculant la totalité de l'air de combustion.

7. Chambre de combustion selon l'une des revendications 1 à 6, caractérisée en ce que l'écart entre le dispositif d'allumage (6) et le panneau accrocheur de flamme se situe dans un rapport de 1,5 à 2,5 par rapport au diamètre D de la conduite d'air (9) véhiculant la totalité de l'air de combustion.

8. Brûleur selon la revendication 1, caractérisé en ce que la conduite d'alimentation (2) pour les gaz d'échappement pénètre dans la chambre de combustion (1).

9. Brûleur selon la revendication 8, caractérisé en ce que la conduite d'alimentation (2) pour les gaz d'échappement présente un crible d'entrée.

10. Brûleur selon la revendication 8, caractérisé en ce que la conduite d'alimentation (2) pour les gaz d'échappement présente dans son segment pénétrant dans la chambre de combustion (1) des éléments de guidage des gaz d'échappement dirigés vers l'intérieur.

11. Brûleur selon la revendication 1, caractérisé en ce que le dispositif d'allumage (6) est disposé dans la chambre d'allumage (4) dans le même plan longitudinal que l'ajutage d'arrivée du combustible (8b).

12. Brûleur selon la revendication 8 pour réchauffer de l'air indépendamment du moteur à des fins de chauffage, caractérisé en ce qu'à la place des gaz d'échappement, de l'air peut alimenter la chambre de combustion (1) par le biais de la conduite d'alimentation (2), air qui traverse un échangeur de chaleur.
